Europäisches Patentamt

European Patent Office

Office européen des brevets

(19)

(11) Veröffentlichungsnummer : **0 360 920 B1**

(12) **EUROPÄISCHE PATENTSCHRIFT**

(45) Veröffentlichungstag der Patentschrift :
**21.09.94 Patentblatt 94/38**

(51) Int. Cl.⁵ : **G06K 9/38**

(21) Anmeldenummer : **88116236.6**

(22) Anmeldetag : **30.09.88**

(54) **Schaltungsanordnung zur Weisswertgewinnung für die Schwarz/Weiss-Quantisierung der Abtastsignale einzelner Fotosensoren.**

(43) Veröffentlichungstag der Anmeldung :
**04.04.90 Patentblatt 90/14**

(45) Bekanntmachung des Hinweises auf die Patenterteilung :
**21.09.94 Patentblatt 94/38**

(84) Benannte Vertragsstaaten :
**AT BE CH DE ES FR GB IT LI NL SE**

(56) Entgegenhaltungen :
**EP-A- 0 052 187
GB-A- 2 020 942
US-A- 4 667 237
IBM TECHNICAL DISCLOSURE BULLETIN,
Band 22, Nr. 6, November 1979, Seiten
2248-2249, New York, US; R.J. REESE: "Black
and white level follower device for anOCR
system"**

(73) Patentinhaber : **COMPUTER GESELLSCHAFT
KONSTANZ MBH
Max-Stromeyer-Strasse 116
D-78467 Konstanz (DE)**

(72) Erfinder : **Dowe, Dietmar, Dipl.-Ing.
Blütenhang 20
D-7768 Stockach-Wahlwies (DE)**
Erfinder : **Schwarz, Hans-Joachim, Dipl.-Ing.
Obere Bündt
D-7750 Konstanz (DE)**
Erfinder : **Kochert, Wilfried, Dipl.-Ing.(FH)
Gaussweg 14
D-7750 Konstanz (DE)**
Erfinder : **Ullrich, Eberhard, Dipl.-Ing.
Schiffstrasse 22
D-7750 Konstanz (DE)**

(74) Vertreter : **Fuchs, Franz-Josef, Dr.-Ing. et al
Postfach 22 13 17
D-80503 München (DE)**

## Beschreibung

Bei der optischen Zeichenerkennung besteht das Problem, daß auf der einen Seite die Erkennungseinheit ein sogenanntes Rasterbild benötigt, bei dem jedes Bildelement (Pixel) einem Schwarz-oder Weißwert zugeordnet wird, der optische Abtaster aber auf der anderen Seite nur ein analoges, aus unterschiedlichen Grauwerten zusammengesetztes Videobild liefert. Auf der Grundlage einer möglichst genauen Grauwertwiedergabe ist deshalb auf die Schwarz/Weiß-Quantisierung große Sorgfalt zu verwenden. Die genaue Grauwertwiedergabe begegnet jedoch folgenden Schwierigkeiten:

- Der optische Abtaster erzeugt ein Pixelraster, das aus den Abtastsignalen mehrerer Fotodioden gebildet wird. Diese Fotodioden sollten im Idealfall gleiche Übertragungskennlinien haben, damit das Ausgangssignal bei allen Pixeldioden streng proportional zur einfallenden Lichtleistung wäre. Tatsache ist aber, daß das Signal zumindest bei einem Teil der Dioden bei Dunkelheit nicht null ist und daß die Proportionalitätsfaktoren bzw. die Empfindlichkeiten von Pixeldiode zu Pixeldiode unterschiedlich sind.
- Für die Grauwerte sind an sich eigentlich nicht die auf die Pixeldioden fallenden Lichtleistungen relevant, sondern die Reflexionsfaktoren der zum Pixel gehörenden Papier-Teilflächen. Diese werden jedoch in der Pixeldioden-Lichtleistung verfälscht, und zwar durch ungleichmäßige Beleuchtung des Papiers und durch ungleichmäßige Helligkeitsübertragung des Objekts (z.B. "Vignettierung").

Die Pixel-Grauwert-Rohdaten müssen also im Idealfall so korrigiert werden, daß sie den Papierpixel-Reflexionsfaktoren von ganz schwarz bis ganz weiß proportional sind.

In diesem Zusammenhang wird auf eine aus der DE PS 28 13 352 bekannte Klemmschaltung für zeitlich veränderliche digitalisierte Eingangssignale verwiesen, bei der die Ausgangssignale sowohl auf einen variablen, von einem Extremwert der Eingangssignale abgeleiteten Bezugswert als auch auf die Eingangssignale selbst bezogen sind. Eine derartige Klemmschaltung wird z.B. bei der optischen Zeichenerkennung verwendet, bei der die Bewertung eines Abtastsignals als Weiß- bzw. Schwarzwert wegen verschiedener Einflüsse, u.a. wegen des wechselnden Kontrastes zwischen Zeichen und Zeichenhintergrund nur mit einem veränderlichen Bezugswert möglich ist. Die Veränderung dieses Bezugswertes wird durch einen konstanten Abbau oder durch eine Neuübernahme des Bezugswertes pro Taktschritt erreicht. Dabei wird für jede Pixeldiode eine Weißwert gespeichert, der beim seriellen Eintreffen eines neuen Pixel-Grauwertes wie folgt modifiziert wird. Ist der Grauwert weißer als der gespeicherte Weißwert, dann wird der Grauwert als neuer Grauwert in den Speicher eingeschrieben. Ist dagegen der Grauwert dunkler als der gespeicherte Weißwert, wird letzterer um ein geringes Dekrement in Richtung schwarz verändert bzw. "gealtert".

Durch sofortiges Aufnehmen weißerer Werte und nur langsames Dekrementieren in Richtung schwarz ergibt sich die Funktion eines Maximalwertespeichers, der für jede Pixeldiode den weißesten Wert der jüngeren Vergangenheit enthält. Dieses Verfahren hat vor allem zwei Nachteile.

- Ein neuer Weißwert wird auch dann aufgenommen, wenn er nur ganz kurz aufgetreten ist. Ein kleiner weißer Glanzpunkt im Papier kann dadurch den Weißwert so verschieben, daß für einige Zeit die auf dieser Pixel-Diode nachfolgenden Grauwerte auf einen zu hohen Weißwert bezogen, d.h. zu dunkel wiedergegeben werden. Es können Schwärzungen als Artefakte "hinter" Glanzpunkten hergezogen werden.
- Wenn eine Pixeldiode mit verlangsamter Abtastgeschwindigkeit über ein dunkles Zeichenelement bewegt wird, hat die Weißwert-Dekrementierung genügend Zeit, den Weißwert stark zu mindern. Bei einem langsam abgetasteten bzw. stillstehenden Zeichen entsteht dann der Eindruck, als würde dieses Zeichen verblassen.

Aus IBM-Technical Disclosure Bulletin, Vol. 22, No. 6, Nov. 1979 ist eine Schaltungsanordnung zur Schwarz/Weiß-Quantisierung von Grauwerte-Signalen bekannt, bei der das Ausgangssignal einer Scanner-Fotodiode digitalisiert und das digitalisierte Signal über eine Decodier-Logikschaltung einem Schwarzwert- oder Weißwert-Zähler zugeführt wird, bei denen jeweils in Abhängigkeit vom mehr oder weniger schwarzen bzw. weißen Eingangssignalen -mittlere Grauwerte werden unterdrückteine Dekrementierung/Inkrementierung bzw. umgekehrt des jeweiligen Zählerstandes erfolgt.

Der vorliegenden Erfindung liegt nun die Aufgabe zugrunde, eine Schaltungsanordnung zur Weißwertgewinnung für die Schwarz/Weiß-Quantisierung der unterschiedliche Grauwerte aufweisenden Abtastsignale einzelner Fotosensoren so zu verbessern, daß sie neben dem eigentlichen Abtastsignal weitere Einflußgrößen berücksichtigt, ferner eine zu abrupte Weißwertkorrektur vermeidet und insgesamt ein sanfteres Regelverhalten hat.

Die Lösung dieser Aufgabe ergibt sich erfindungsgemäß durch die Merkmale des Patentanspruchs 1. Bei der Erfindung werden nun die gespeicherten Weißwerte nicht mehr sofort überschrieben, wenn ein "weißerer" Grauwert auftritt. In diesem Fall wird der Weißwert nur erhöht, und zwar um einen Wert (Inkrement), der, abhängig von den jeweiligen Bedingungen, unterschiedlich groß sein kann. Ebenso wird bei dunklerem Grauwert nicht mit einer konstanten Rate "gealtert", sondern der Weißwert wird vermindert, und zwar um einen Wert (Dekrement), der auch hier abhängig von den jeweiligen Bedingungen unterschiedlich groß sein kann. Vorteilhaft ist dabei, daß einerseits die Weißwertfindung örtlich geglättet ist, d.h. daß der Weißwert auch bei sehr kleinen, besonders hellen Papierdetails nicht mehr so deutlich korrigiert wird und daß andererseits der Betrag von Inkrement und Dekrement jeweils günstig an die jeweils aktuellen Bedingungen angepaßt werden kann.

Vorteilhafte Weiterbildungen ergeben sich aus den Merkmalen der Unteransprüche.

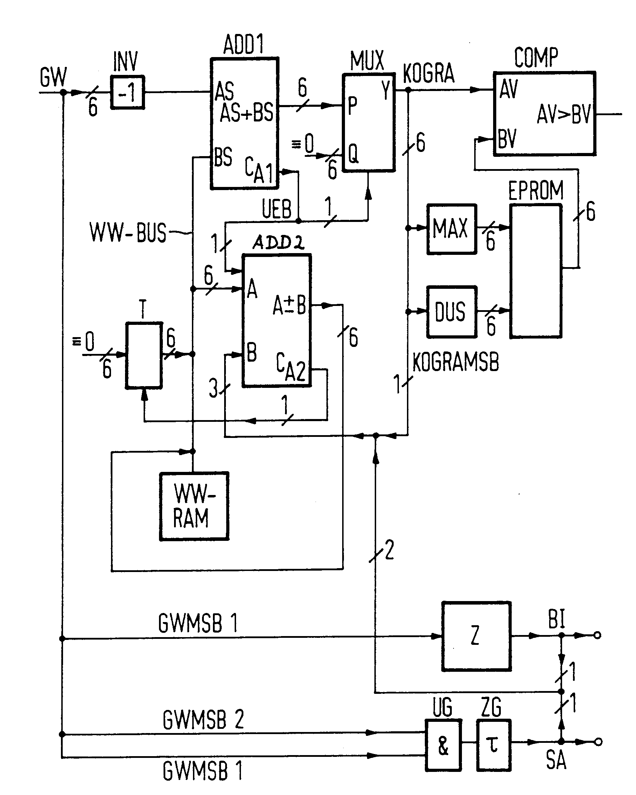

Im folgenden wird ein Ausführungsbeispiel der Erfindung anhand der Zeichnung näher erläutert:

Die in der Figur als Blockschaltbild dargestellte Prinzipschaltung für eine Grauwertekorrektur zur verbesserten Schwarz/Weiß-Quantisierung besteht im wesentlichen aus einem ersten Addierer ADD1, einem Weißwerte-Speicher WW-RAM, einem zweiten Addierer ADD2 zur Bildung verschiedener Korrekturwerte, einem Maximalwertspeicher MAX, einer Mittelwert-Schaltung DUS, einer Schwellwert-Schaltung EPROM und einem Vergleicher COMP. Die ankommenden digitalisierten Grauwerte GW, z.B. 6 bit, gelangen über einen Inverter INV an den Eingang AS des ersten Addierers ADD1. Der zweite Eingang BS des ersten Addierers ADD1 ist über einen Weißwerte-Bus WW-BUS mit dem Weißwerte-Speicher WW-RAM verbunden. Von den dort gespeicherten maximalen Weißwerten wird das aktuelle Grausignal GW, da der erste Addierer ADD1 wegen des vorgeschalteten Inverters INV als Subtrahierer wirkt, abgezogen. Nach dem subtrahierenden Addierer ADD1 folgt ein Multiplexer MUX, der, gesteuert durch ein am Übertragsausgang $C_{A1}$ des ersten Addierers ADD1 auftretendes Übertragssignal UEB, entweder die am Ausgang AS+BS auftretenden korrigierten Grauwerte KOGRA oder über den Eingang Q jeweils Nullen durchschaltet. Letzteres ist für den Fall vorgesehen, daß sich auf Grund der Subtraktion im ersten Addierer ADD1 ein negativer Wert für die korrigierten Grauwerte KOGRA ergeben würde. Die korrigierten Grauwerte KOGRA werden nun zum einen direkt an einen ersten Eingang AV des Vergleichers COMP und zum anderen an die Eingänge des Maximalwertspeichers MAX bzw. der Mittelwertschaltung DUS geleitet. Die Ausgangssignale des Maximalwertspeichers MAX und der Mittelwertschaltung DUS adressieren die aus einem programmierbaren Lesespeicher EPROM bestehende Schwellwertschaltung, die einen der jeweiligen Adresse zugeordneten Schwellwert an den zweiten Eingang BV des Vergleichers COMP abgibt. Anhand dieses Schwellwertes wird entschieden, ob der am Eingang AV des Vergleichers COMP zugeführte korrigierte Grauwert KOGRA als Schwarz- oder als Weißwert zu quantifizieren ist.

Zu den Einflüssen, die eine Grauwertekorrektur erforderlich machen, gehören insbesondere das Abtastobjekt, beispielsweise ein am Abtaster vorbeibewegter Papierbeleg BI mit seinen spezifischen Reflexionsfaktoren und eine sogenannte "schnelle Alterung" SA, wenn die Lampenregelung für die Lichtquelle des Abtasters sehr schnell in Richtung dunklerer Werte tendiert. Zu diesem Zweck wird das höchstwertige Bit GWMSB1 des digitalen Grauwerte-Signals GW einem Zähler Z mit Hysterese zugeführt, der am Ausgang das Signal BI liefert. Außerdem wird durch eine UND-Verknüpfung UG der beiden höchstwertigen Grauwerte-Bits GWMSB1,2 ein durch ein Zeitglied ZG verzögertes Signal SA gebildet. Dieses Zeitglied ZG ist dazu vorgesehen, um schnelle Übergänge von Pixel zu Pixel zu glätten.

Das aus Inkrementen/Dekrementen bestehende Korrektursignal für den zweiten Addierer ADD2, dessen erster Eingang A mit dem Weißwerte-Bus WW-BUS des Weißwertespeichers WW-RAM verbunden ist, besteht demnach aus dem höchstwertigen Bit KOGRAMSB des korrigierten Grauwerts KOGRA, den daraus abgeleiteten Signalen BI und SA sowie aus dem Übertragssignal UEB des ersten Addierers ADD1, wobei die Wertigkeit der insgesamt vier Bits wie folgt festgelegt wird:

|  | Bitstelle |
| --- | --- |
| UEB + SA | $2^3$ |
| BI | $2^2$ |
| SA- | $2^1 + 2^0$ |
| KOGRAMSB | $2^0$ |

Das Signal UEB = 0 bedeutet, daß das Vorzeichen am Eingang des zweiten Addierers ADD2 positiv ist. Bei dem Signal SA- geht das niederwertige Bit $2^0$ zusätzlich an den übertragseingang des zweiten Addierers ADD2.

Für den Fall, daß auf Grund eines Dekrements am Eingang B des zweiten Addierers ADD2 und niedrigen Weißwerten aus dem Weißwert-Speicher WW-RAM am Ausgang A±B ein dekrementierter Weißwert <null entstehen würde, werden über einen Treiber T, gesteuert durch das Übertragssignal $C_{A2}$ des zweiten Addierers ADD2, jeweils "0"-Bits auf den Weißwerte-Bus WW-BUS gelegt. Abhängig von den jeweiligen Abtastbedingungen ergeben sich nun aus den entsprechenden Bitkombinationen, gebildet aus den Signalen UEB, BI, SA und KOGRAMSB, z.B. folgende Inkrement- bzw. Dekrement-Werte.

In Abhängigkeit von den jeweiligen Abtastbedingungen ergeben sich nun aus den entsprechenden Bitkombinationen, gebildet aus den Signalen UEB, BI, SA und KOGRAMSB, z.B. folgende Inkrement-Dekrement-Werte:

|  |  | INKR | DEKR |
|---|---|---|---|
| UEB-, BI, SA-, KOGRAMSB- | | + 7 | |
| UEB-, BI, SA, KOGRAMSB- | | + 12 | |
| UEB, BI-, SA-, KOGRAMSB- | | | - 5 |
| UEB, BI-, SA-, KOGRAMSB | | | - 4 |
| UEB, BI, SA, KOGRAMSB- | | | - 4 |
| UEB, BI, SA, KOGRAMSB | | | - 3 |
| UEB, BI, SA-, KOGRAMSB- | | | - 1 |
| UEB, BI, SA-, KOGRAMSB | | | NULL |

Inkrement + 7 wird gewählt, wenn der Grauwert GW heller als der Weißwert WW ist und der Abtaster einen Beleg abtastet. Inkrement + 12 wird gewählt, wenn zusätzlich der Zustand der Lampenregelung anzeigt, daß ein besonders hoher Grauwert GW vorliegt.

Die Dekremente - 5 und - 4 werden in der Beleglücke gewählt, Dekrement - 4 tritt aber auch auf, wenn der Abtaster einen Beleg abtastet und das Signal SA anzeigt, daß die Lampenhelligkeit stark zurückgeht.

Das Dekrement wird auf - 3 vermindert, wenn das fragliche Pixel wahrscheinlich zu einem schwarzen Aufdruck gehört, der durch eine Weißwertabdunkelung nicht ausgedünnt werden soll. Dekrement - 1 wird nur dann gewählt, wenn der auf dem Beleg auftretende Grauwert GW dunkler als der Weißwert WW ist und wenn die Lampenregelung momentan nicht deutlich abwärts regelt.

Inkrement/Dekrement = null, d.h. Konstanthalten des Weißwertes, wird dann gewählt, wenn das fragliche Pixel anscheinend zu einer aufgedruckten Schwärzung gehört, die nicht durch Weißwertabdunkelung ausgedünnt werden soll.


## Patentansprüche

1. Schaltungsanordnung zur Weißwertgewinnung für die Schwarz/Weiß-Quantisierung der unterschiedliche Grauwerte aufweisenden Abtastsignale einzelner Fotosensoren, mit einem ersten Addierer (ADD1), dessen erster Eingang (AS) den digitalisierten Ausgangssignalen (GW) der Fotosensoren zugeordnet ist und dessen zweiter Eingang (BS) mit den Ausgängen eines Weißwerte-Speichers (WW-RAM) verbunden ist, mit einem zweiten Addierer (ADD2), der eingangsseitig die aktuell gespeicherten Weißwerte mit einem Korrektursignal verknüpft und das resultierende Signal wieder in den Weißwerte-Speicher (WW-RAM) einliest, mit einem dem ersten Addierer (ADD1) nachgeschalteten Vergleicher (COMP), der in Abhängigkeit von einem aus Maximal- und Durchschnitts-Schwärzungswerten des Ausgangssignals (KOGRA) des ersten Addierers (ADD1) abgeleiteten Schwellwertes ein Schwarz- oder Weißsignal liefert, wobei aus dem höchstwertigen Bit (KOGRAMSB) des am Ausgang des ersten Addierers (ADD1) gebildeten korrigierten Grauwerte-Signals (KOGRA), aus einem aus dem höchstwertigen Bit (GWMSB1) des Abtastsignals abgeleiteten und vom Abtastobjekt abhängigen Impuls (BI) sowie aus einem aus den zwei höchstwertigen Bits (GWMSB1,2) des Abtastsignals abgeleiteten, auf die Regelung des Lampenstroms der Abtastlichtquelle bezogenen Regelgröße-Bit (SA) ein variables Korrektursignal gebildet wird, das in Abhängigkeit von einem am ersten Addierer (ADD1) auftretenden bzw. nicht auftretenden Übertragssignal (UEB) ein Weißwerte-Inkrement/Dekrement zur Einspeisung in den Weißwerte-Speicher (WW-RAM) liefert.

2. Schaltungsanordnung nach Anspruch 1,
   **dadurch gekennzeichnet,** daß der Ausgang der ersten Addierstufe (ADD1) mit dem ersten Ausgang eines Multiplexers (MUX) verbunden ist, der vom Übertragssignal ($C_{A1}$) der ersten Addierstufe (ADD1) gesteuert ist, und dessen zweiter Eingang mit "null" belegt ist.

3. Schaltungsanordnung nach Anspruch 1 oder 2,
   **dadurch gekennzeichnet**, daß ein Treiber (T) vorgesehen ist, der abhängig vom Übertragssignal ($C_{A2}$) der zweiten Addierstufe (ADD2) jeweils "null" Bits in den Weißwerte-Speicher (WW-RAM) einspeichert.

## Claims

1. Circuit arrangement for the white level acquisition for black/white quantization of those scanned signals of individual photosensors which exhibit differing grey levels, having a first adder (ADD1), the first input (AS) of which is assigned to the digitized output signals (GW) of the photosensors and the second input (BS) of which is connected to the outputs of a white level memory (WW-RAM), having a second adder (ADD2), which on the input side links the currently stored white levels with a correction signal and reads the resultant signal back into the white level memory (WW-RAM), having a comparator (COMP) which follows the first adder (ADD1) and which delivers a black or white signal as a function of a threshold value derived from maximum blackening levels and average blackening levels of the output signal (KOGRA) of the first adder (ADD1), in which a variable correction signal is formed from the most significant bit (KOGRAMSB) of the corrected grey level signal (KOGRA) formed at the output of the first adder (ADD1), from a pulse (BI) which is derived from the most significant bit (GWMSB1) of the scanned signal and which is dependent upon the scan object, as well as from a control variable bit (SA) which is derived from the two most significant bits (GWMSB1,2) of the scanned signal and which is related to the control of the lamp current of the scan light source, which variable correction signal delivers a white level increment/decrement for feeding into the white level memory (WW-RAM) as a function of a carry signal (UEB) occurring or respectively not occuring at the first adder (ADD1).

2. Circuit arrangement according to Claim 1, characterized in that the output of the first adder stage (ADD1) is connected to the first output of a multiplexer (MUX), which is controlled by the carry signal ($C_{A1}$) of the first adder stage (ADD1) and the second input of thereof is occupied by "zero".

3. Circuit arrangement according to Claim 1 or 2, characterized in that a driver (T) is provided, which in each instance stores "zero" bits in the white level memory (WW-RAM) as a function of the carry signal ($C_{A2}$) of the second adder stage (ADD2).

## Revendications

1. Montage pour déterminer le niveau de blanc pour la quantification noir/blanc des signaux d'échantillonnage, qui présentent des valeurs de gris différentes, de différents capteurs photosensibles, comportant un premier additionneur (ADD1), dont la première entrée (AS) est associée aux signaux de sortie numérisés (GW) des capteurs photosensibles et dont une seconde entrée (BS) est reliée aux sorties d'une mémoire de niveaux de blanc (WW-RAM), un second additionneur (ADD2), qui, côté entrée, combine les niveaux de blanc actuellement mémorisés avec un signal de correction et introduit à nouveau le signal résultant dans la mémoire des niveaux de blanc (WW-RAM), un comparateur (COMP) branché en aval du premier additionneur (ADD1) et qui délivre un signal de noir ou un signal de blanc en fonction d'une valeur de seuil tirée d'une valeur de noircissement maximale et d'une valeur de noircissement moyen du signal de sortie (KOGRA) du premier additionneur (ADD1), auquel cas, à partir du bit de poids maximum (KOGRAMSB) du signal de niveau de blanc corrigé (KOGRA), formé à la sortie du premier additionneur (ADD1), à partir d'une impulsion (BI) dérivée du bit de poids maximum (GWMSB1) du signal d'échantillonnage et de l'objet d'échantillonnage, ainsi qu'à partir d'un bit de grandeur de régulation (SA), qui est dérivé des deux bits de poids maximum (GWMSB1,2) du signal d'échantillonnage et est rapporté à la régulation du courant de la lampe de la source de lumière d'échantillonnage, est formé un signal de correction variable, qui, en fonction d'un signal de report (UEB) qui apparaît ou non dans le premier additionneur (ADD1), délivre un incrément/décrément de niveau de blanc destiné à être introduit dans la mémoire des niveaux de blanc (WW-RAM).

2. Montage suivant la revendication 1, caractérisé par le fait que la sortie du premier étage additionneur (ADD1) est reliée à la première sortie d'un multiplexeur (MUX), qui est commandé par le signal de report ($C_{A1}$) du premier étage additionneur (ADD1) et dont la seconde entrée est occupée par "zéro".

3. Montage suivant la revendication 1 ou 2, caractérisé par le fait qu'il est prévu un étage d'attaque (T), qui, en fonction du signal de report ($C_{A2}$) du second étage additionneur (ADD2), mémorise respectivement des bits "zéro" dans la mémoire de niveaux de blanc (WW-RAM).